# FASCICULE DE BREVET EUROPEEN

(11) **EP 0 755 841 B1**
(45) Date de publication et mention de la délivrance du brevet: **29.12.1999**
(21) Numéro de dépôt: 96410080.4
(22) Date de dépôt: 12.07.1996
(51) Int. Cl.: B62B 3/04

(54) **Chariot de manutention**
Lastförderwagen
Load handling trolley

(30) Priorité: 26.07.1995 FR 9509356
(43) Date de publication de la demande: 29.01.1997
(73) Titulaire: ANNECY ELECTRONIQUE, F-74410 Saint Jorioz (FR)
(72) Inventeur: Wintz, Bernard, 74320 Sevrier (FR)
(74) Mandataire: Gasquet, Denis

(56) Documents cités:
- DE-U- 9 413 355
- FR-A- 969 663
- US-A- 1 392 387
- US-A- 1 733 043
- US-A- 2 730 373
- US-A- 2 763 491
- US-A- 4 969 657

## Description

La présente invention concerne un chariot de manutention destiné au déplacement d'une charge importante, ne pouvant être effectué manuellement.

De tels chariots sont constitués de manière connue par un plateau pourvu de roulettes sous son plan inférieur et sur le plan supérieur duquel est disposée la charge. Ce type de plateau est en fait généralement une palette constituée dans son plan médian par des tasseaux délimitant entre eux des couloirs transversaux dans lesquels sont introduites à l'avant et à l'arrière des sangles formant des boucles, destinées à s'enrouler autour du corps de deux manutentionnaires.

Un des inconvénients de ce type de chariot réside dans son instabilité pendant l'opération de dépose de la charge. En effet, on comprend bien qu'à ce moment la, la présence des roulettes sous le chariot constitue un gros handicap car elles rendront celui-ci mobile dès le premier contact avec la charge, ce qui aura tendance à provoquer son dérapage, voire son basculement, au risque de blesser le personnel de manutention et d'endommager le matériel à transporter, à plus forte raison lorsqu'il s'agit d'objets fragiles et délicats demandant beaucoup de précautions, comme, par exemple, le transport d'un piano. Dans ce cas particulier, celui-ci, notamment lorsqu'il s'agit d'un piano à queue, est d'abord déposé sur une palette sur son champ latéral le plus long, afin de procéder à l'escamotage de ses pieds, puis, il est hissé manuellement sur ledit chariot. Cette opération est également pénalisante pour le personnel car elle nécessite un effort non seulement proportionnel à la charge qui peut atteindre 400 kilogrammes, mais aussi proportionnel à la hauteur du chariot qui est égale à celle du plateau ou palette à laquelle il faut ajouter celle des roulettes. On comprend donc la difficulté rencontrée pour la mise en place de la charge.

Par ailleurs, le transport d'un matériel ou d'un objet très fragile nécessite d'impliquer au chariot une vitesse relativement constante et en tous cas sans à-coups. Or, cela est pratiquement impossible lorsqu'il s'agit d'une poussée manuelle. La difficulté est également accrue lorsque, sur le parcours à effectuer, se trouve un obstacle à franchir, par exemple, une marche ou encore l'amorce d'une déclivité constituant une rupture du plan de roulement au sol. Ajoutons à ces commentaires, que le chariot, du fait de ses roulettes pivotantes, ne lui permet pas d'avoir une trajectoire vraiment contrôlé, ce qui est, bien entendu, un inconvénient supplémentaire non négligeable.

On connait par le brevet US. A. 2. 730. 373 de l'art antérieur, un chariot comportant deux longerons longitudinaux reliés entre eux par une traverse qui permet notamment de solidariser les longerons. On connait également un chariot décrit dans le brevet US. A. 1. 733. 043 dont les longerons sont formés de deux flasques paralèlles, toutefois, les chariots de l'art antérieur ne donnent pas entière satisfaction.

Ainsi le chariot de manutention destiné au transport d'une charge, notamment d'un piano, selon l'invention, est du type comportant des moyens de déplacement longitudinal permettant le déplacement du chariot selon une trajectoire sensiblement rectiligne parallèle à un axe longitudinal et des moyens de maintien de charge permettant le maintien de ladite charge sur le chariot, les moyens de déplacement longitudinal comprenant deux longerons latéraux disposés longitudinalement parallèlement à l'axe longitudinal, lesdits longerons formant deux trains de roues au moins au nombre de deux, à savoir, une roue avant et une roue arrière, et étant solidarisés entre eux lors du transport de la charge par les moyens de maintien de charge, les moyens de maintien de charge étant constitués par au moins deux traverses disposées transversalement entre les longerons grâce à des moyens de liaison, lesdites traverses étant indépendantes et démontables par rapport aux longerons, chacun des longerons étant constitués par deux flasques paralèlles, et est caractérisé en ce que les moyens de liaison des longerons avec les traverses sont constitués par au moins quatre tirants coopérant avec chacune des extrémités desdites traverses prédisposées librement sous les longerons de manière à les amener en contact des bords inférieurs des flasques de ces derniers, lors d'une action en traction sur les extrémités libres des tirants, en prenant appui sur les bords supérieurs des mêmes flasques après les avoir traversés.

Selon un mode de réalisation préféré de l'invention, chacun des longerons est constitué par deux flasques parallèles disposés longitudinalement et déterminant entre eux un espace dans lequel au moins deux roues sont montées en rotation sur des axes transversaux de rotation correspondants traversant lesdits flasques.

Selon une caractéristique complémentaire, les tirants sont constitués, d'une part, par une partie supérieure filetée réalisée à leurs extrémités libres destinée à coopérer avec les bords supérieurs des flasques des longerons et, d'autre part, par une partie en forme d'anneau réalisée à leurs extrémités opposées et destinée à l'insertion libre des extrémités des traverses.

En outre, le chariot de manutention comporte des moyens de soulèvement de charge destinés à permettre la mise en place de la charge sur ledit chariot.

Selon le mode de réalisation préféré, les moyens de soulèvement de charge sont constitués par un moto réducteur exerçant l'action en traction sur chacun des tirants d'un même longeron par l'intermédiaire d'un arbre de sortie muni de moyens d'entraînement en rotation d'un fourreau fileté avec lequel coopère l'extrémité libre également filetée du tirant, de manière à ce que l'entraînement en rotation du fourreau par le moto réducteur sur la partie filetée du tirant, préalablement immobilisé en rotation par une traverse insérée dans son anneau d'extrémité, provoque conséquemment un mouvement de montée ou de descente desdites traverses.

Selon une autre caractéristique, le chariot de manutention comporte des moyens de pivotement et/ou des moyens de basculement destinés à permettre au chariot de pivoter afin de changer de direction et/ou de basculer autour d'un axe sensiblement transversal de manière à favoriser le franchissement d'obstacle lors du transport de la charge. Les moyens de pivotement et les moyens de basculement peuvent être constitués par deux roues intermédiaires de pivotement montées en rotation en vis-à-vis sur chacun des longerons entre la roue avant et la roue arrière et par des moyens d'articulation aptes à permettre à la demande son alignement par rapport aux deux autres ou à la rendre escamotable entre les flasques desdits longerons ou inversement à la surbaisser par rapport aux deux autres.

Selon une caractéristique complémentaire, le chariot de manutention comporte des moyens de propulsion constitués par au moins un moteur électrique alimenté par une batterie, ledit moteur étant monté en liaison mécanique avec au moins deux roues d'entraînement situées en vis-à-vis sur chaque longeron.

La présente invention concerne également les caractéristiques qui ressortiront au cours de la description qui va suivre et qui devront être considérées isolément ou selon toutes leurs combinaisons techniques possibles.

Cette description donnée à titre d'exemple non limitatif, fera mieux comprendre comment l'invention peut être réalisée, en référence aux dessins annexés sur lesquels :

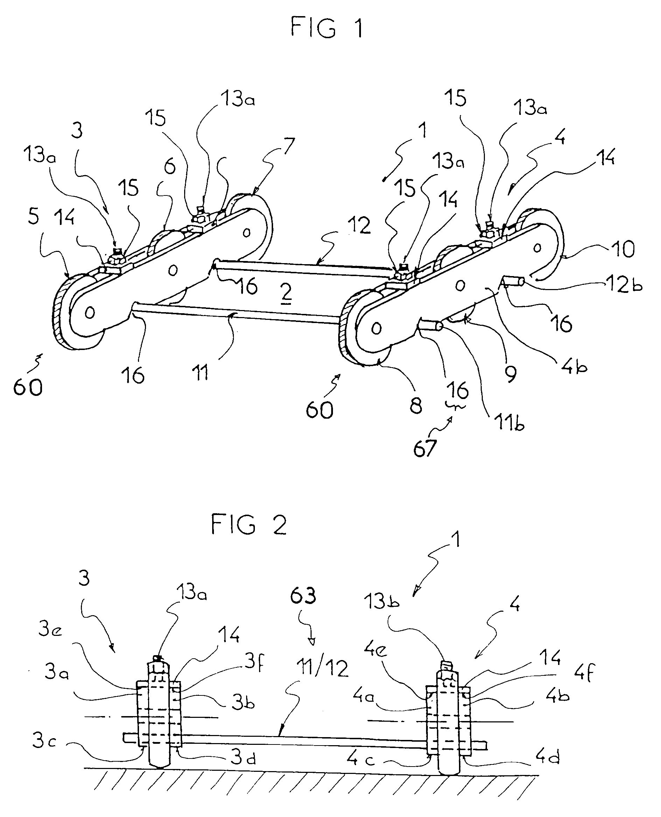

La figure 1 est une vue en perspective d'un chariot de manutention selon l'invention, après assemblage de ses éléments constitutifs.
La figure 2 est une vue en bout d'un chariot selon la figure 1.

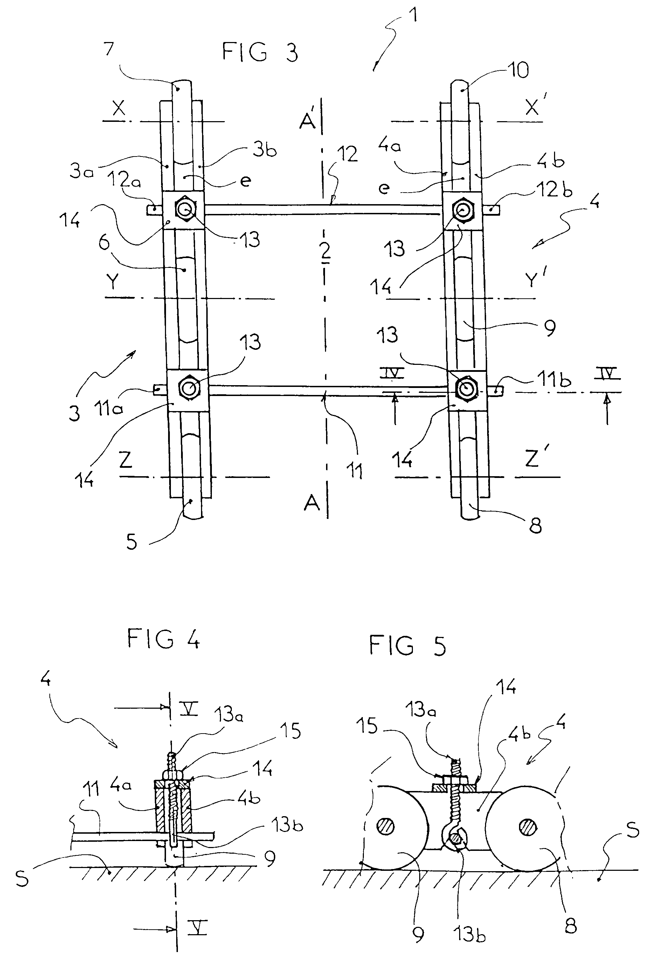

La figure 3 est une vue de dessus du même chariot selon la figure 1.
La figure 4 est une vue en coupe selon la ligne IV-IV de la figure 3.
La figure 5 est une vue en coupe selon la ligne V-V de la figure 4.
La figure 6 est un synoptique de montage du chariot vu en bout selon les figures 1 à 5, par rapport à une charge préalablement en place sur une palette.
La figure 6a est une vue partielle latérale de la figure 6.
La figure 7 est une vue en coupe selon la ligne VII-VII de la figure 6.
La figure 8 est une vue selon la figure 6 après assemblage des éléments du chariot et levée de la charge.
La figure 9 est une vue schématique du chariot, selon les figures précédentes, équipé des moyens de propulsion aptes à le rendre automoteur.
La figure 10 est une vue de détails montrant des moyens de liaison entre un moto réducteur et l'un des organes de liaison des éléments entre eux.
La figure 11 représente un boîtier de commande donné à titre d'exemple.

Le chariot (1) selon l'invention est du type comportant des moyens de déplacement longitudinal (60) destinés à permettre le déplacement du chariot selon une trajectoire sensiblement rectiligne parallèle à son axe longitudinal (AA'). Il comporte, de plus, des moyens de pivotement (61) destinés à lui permettre d'effectuer des virages ou de pivoter quasiment sur place et des moyens de basculement (62) lui permettant de basculer d'avant (AV) en arrière (AR) autour d'un axe sensiblement transversal afin de favoriser le franchissement d'obstacles tels que des escaliers ou des trottoirs.

Les moyens de déplacement longitudinal (61) sont constitués par des longerons (3, 4) formant deux trains de roues latéraux (5, 6, 7 - 8, 9, 10) indépendants ; lesdits longerons (3, 4) peuvent être solidarisés entre eux par des moyens de maintien de charge (63) indépendants et démontables, lesdits moyens de maintien (63) destinés à supporter la charge (P) sont fixés aux longerons grâce à des moyens de liaison (64) lors de la construction du chariot (1).

Selon le mode de réalisation préféré de l'invention, ledit chariot (1) est, en outre, muni de moyens de propulsion (65) aptes à le rendre automoteur, permettant son déplacement à vide ou en charge sans requérir d'efforts de la part de son utilisateur. Il possède avantageusement des moyens de soulèvement de charge (66) destinés à permettre la mise en place de manière automatique ou manuelle de la charge (P) sur le chariot.

Selon un mode de réalisation préféré de l'invention, chacun des longerons (3, 4) formant les trains de roue est donc constitué par deux flasques (3a, 3b - 4a, 4b) déterminant entre eux un espace "e" dans lequel sont montées en rotation trois roues, à savoir, une roue avant (5, 8), une roue arrière (7, 10) et une roue intermédiaire de pivotement (6, 9), lesdites roues étant montées sur des axes transversaux de rotation (XX'), (YY') et (ZZ') traversant lesdits flasques.

Selon une caractéristique complémentaire de l'invention, les roues d'extrémité avant et/ou arrière (5, 7 - 8, 10) des longerons (3, 4) sont disposées entre les flasques (3a, 3b - 4a, 4b) les constituant, selon des entre-axes (ZZ', XX') tels à les faire dépasser de part et d'autre desdits flasques, pour constituer des butoirs. C'est pour cette raison qu'il sera préféré des roues en caoutchouc apportant également un confort d'utilisation en procurant un effet d'amortissement des vibrations au cour d'un déplacement.

Selon ce mode de réalisation préféré, les moyens de liaison des longerons (3, 4) avec les traverses (11, 12) sont constitués par quatre tirants verticaux (13) coopérant avec chacune des extrémités (11a, 11b -12a, 12b) desdites traverses (11, 12) prédisposées librement sous les longerons (3, 4) avantageusement dans un sens perpendiculaire à ceux-ci. De cette manière, elles sont amenées, lors du montage du chariot (1) en contact des bords inférieurs (3c, 3d - 4c, 4d) des flasques (3a, 3b - 4a, 4b) desdits longerons (3, 4) lors d'une action en traction sur les extrémités libres (13a) des tirants (13) en prenant appui sur les bords supérieurs (3e, 3b - 4e, 4f) des mêmes flasques après les avoir traversés par l'espace "e" qu'ils délimitent.

Plus précisément, chacun des tirants (13) est constitué, d'une part, par une partie supérieure filetée réalisée à son extrémité libre (13a), destinée à coopérer avec les bords supérieurs (3e, 3f - 4e, 4f) des flasques (3a, 3b - 4a, 4b) des longerons (3, 4) et, d'autre part, par une partie en forme d'anneau (13b) réalisée à son extrémité opposée et destinée à l'insertion libre des extrémités (11a, 11b -12a, 12b) des traverses (11, 12).

Par ailleurs, la prise d'appui des extrémités libres (13a) de chacun des tirants (13) sur les bords supérieurs (3e, 3f - 4e, 4f) des flasques (3a, 3b - 4a, 4b) des longerons (3, 4) s'effectue par l'intermédiaire d'une bride (14) s'étendant transversalement à ceux-ci et dont le serrage s'effectue par action sur un écrou (15) en prise avec les parties filetées desdites extrémités (13a).

Selon une autre caractéristique de l'invention, il est prévu un dispositif de verrouillage (67) permettant d'immobiliser les traverses (11, 12) par rapport aux longerons (31) lorsque ceux-ci sont solidarisés par le biais des moyens de liaison (64). Ainsi, les bords (3c, 3d - 4c, 4d) inférieurs de chacun des quatre flasques (3a, 3b - 4a, 4d) constituant les deux longerons (3, 4) comportent dans des zones d'extrémités de ceux-ci, deux échancrures (16), lesdites échancrures pouvant être avantageusement ménagées en vis-à-vis les unes des autres selon deux axes parallèles entre eux et perpendiculaires aux dits longerons (3, 4), de manière à assurer le positionnement et le verrouillage des traverses (11, 12) dans une position transversale lors d'une traction sur les tirants de liaison (13).

Ces échancrures (16) formant le dispositif de positionnement et de verrouillage (67) pourront être en forme de V renversé ou encore en forme de U renversé, ou toute autre forme appropriée.

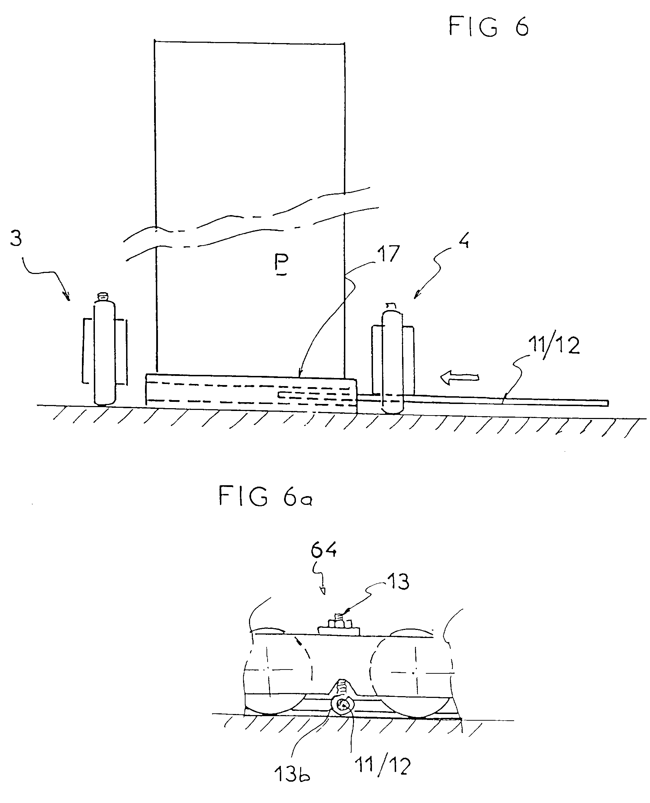

Préférentiellement, et comme le montrent les figures 6, 6a, 7 et 8, les éléments constituant le chariot (3, 4 -11, 12) sont, en fait, assemblés après le dépôt de la charge (P) sur un plateau-support (17) posé au sol, les deux traverses (11, 12) étant introduites dans les extrémités (13b) des deux tirants respectifs (13) qui sont ensuite mis en traction vers le haut provoquant la levée de la charge (P) par rapport aux roues (5 à 10) des deux longerons (3, 4) en appui sur le sol (S). Selon ce mode de réalisation, la mise en traction est obtenue grâce aux moyens de soulèvement de charge (66).

On comprend bien ici toute l'importance de l'invention, comme déjà évoqué dans le préambule, du fait que la charge est soulevée par la construction même du chariot, s'effectuant directement par rapport à cette charge (P) disposée en attente sur le sol (S). La levée s'effectuant de façon généralement parallèle, le risque de basculement et de dérapage du chariot (1) est ainsi évité.

Bien entendu, on peut également imaginer que les éléments constituant le chariot (1) puissent être assemblés préalablement au dépôt de la charge (P) sur traverses (11, 12) et par l'intermédiaire ou non d'un plateau support (17).

Selon ce mode de réalisation préféré, les moyens de pivotement (61) et les moyens de basculement (62) sont constitués par les roues intermédiaires de pivotement (6, 9), lesdites roues intermédiaires (6, 9) sont disposées entre les roues d'extrémité (5, 7 - 8, 10) de chacun des longerons (3, 4), celles-ci disposent de moyens d'articulation aptes à permettre à la demande son alignement par rapport aux deux autres ou à la rendre escamotable entre les flasques (3a, 3b - 4a, 4b) desdits longerons (3, 4) ou inversement à la surbaisser par rapport aux deux autres, de manière à provoquer un effet de bascule dudit chariot favorisant le franchissement d'un obstacle en cours de déplacement de la charge (P), ainsi que le pivotement dudit chariot.

En fait, ces roues intermédiaires (6, 9) sont montées sur un bras de manoeuvre pivotant actionnable manuellement ou bien électriquement.

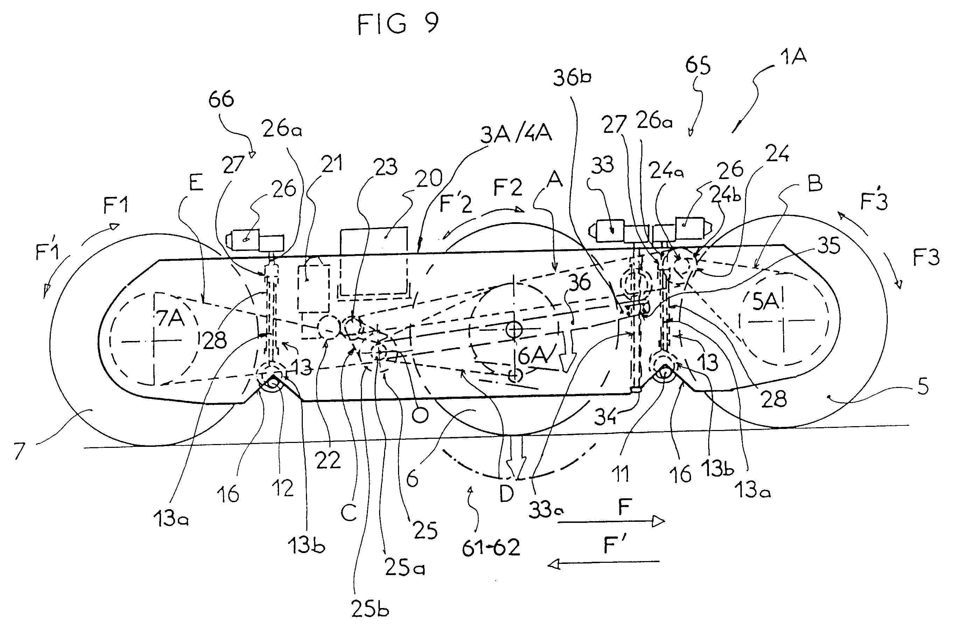

Selon l'exemple de réalisation du mode de réalisation illustré figure 9, le chariot (1A) comporte des moyens de propulsion constitués par au moins un moteur électrique (21) alimenté par une batterie (20) et en liaison mécanique avec au moins deux roues d'entraînement respectivement en vis-à-vis sur chaque longeron (3, 4 - 3A, 4A).

En fait, dans ce cas, chacun des longerons (3A, 4A) dispose d'un moto réducteur unique d'entraînement (21) dont une roue de sortie (22) est en liaison avec un satellite (23) entraînant lui-même :
une première chaîne (A) disposée sur le premier étage (24a) d'une première poulie de renvoi (24), dont le second étage (24b) d'un diamètre inférieur est en liaison avec l'arbre (5A) d'une première roue (5) du longeron (3A) par l'intermédiaire d'une seconde chaîne (B) ; une troisième chaîne (C) disposée sur le premier étage (25a) d'une seconde poulie de renvoi (25), dont le second étage (25b) d'un diamètre inférieur est en liaison, d'une part, avec l'arbre (6A) d'une seconde roue (6) du longeron (3A) par l'intermédiaire d'une quatrième chaîne (D) et, d'autre part, avec l'arbre (7A) d'une troisième roue (7) du longeron (3A), par l'intermédiaire d'une cinquième chaîne (E), le rapport des diamètres de la roue d'entraînement (22) du moto réducteur (21), de la roue satellite (23), du premier et second étage (24a, 24b - 25a, 25b) de la première poulie (24) et de la seconde poulie de renvoi (25) identique, ainsi que des arbres (5A, 6A, 7A) de roues également identiques, étant tel à conférer aux dites roues une même vitesse de rotation pour un déplacement de l'ensemble selon un sens donné, avant ou arrière (F ou F').

Le sens de rotation des différents éléments précités, s'agissant tant des chaînes que des poulies ou que des arbres de roues, est indiqué par des petites flèches concourant au sens de rotation selon respectivement F1, F2, F3 et F'1, F'2, F'3, des roues (5, 6 et 7).

Il est évident que la description du longeron motorisé (3A) qui vient d'être effectuée vaut pour un même longeron (4) complémentaire, associé aux roues (8, 9, 10).

Selon le mode de réalisation préféré de l'invention tel qu'illustré figure 9, l'action en traction sur chacun des tirants (13) d'un même longeron (3A ou 4A) est exercée par l'intermédiaire des moyens de soulèvement de charge (66) constitués par un moto réducteur (26) dont l'arbre de sortie (26a) est muni de moyens d'entraînement en rotation (27) d'un fourreau fileté (28) avec lequel coopère l'extrémité libre (13a) également filetée du tirant (13), de manière à ce que l'entraînement en rotation du fourreau (28) par le moto réducteur (26) sur la partie filetée (13a) du tirant (13), préalablement immobilisé en rotation par une traverse (11 ou 12) insérée dans son anneau d'extrémité (13b), provoque conséquemment un mouvement de montée ou de descente desdites traverses (11 ou 12).

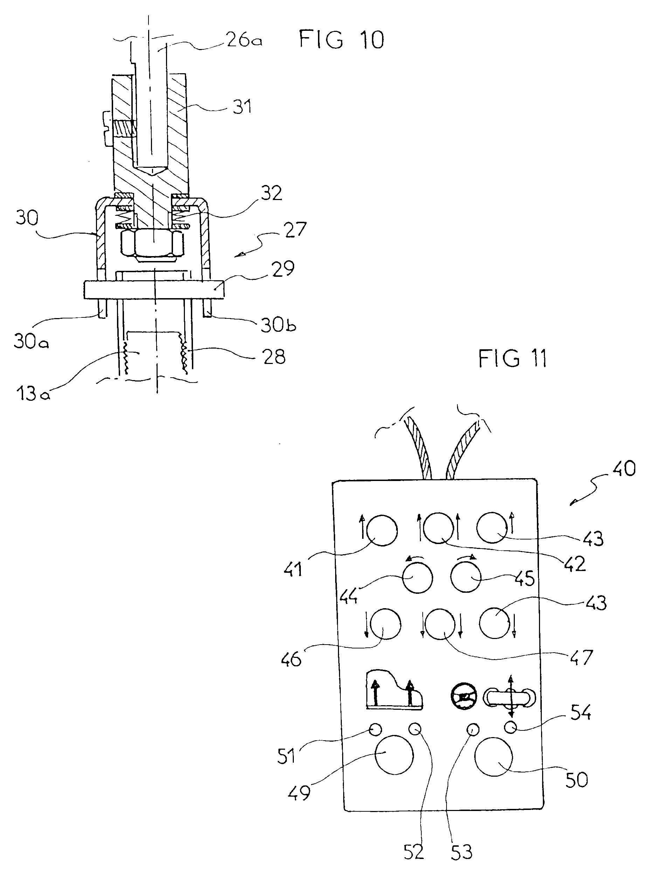

Ces moyens sont représentés à plus grande échelle sur la figure 10 dans laquelle on voit selon un exemple de réalisation des moyens d'entraînement en rotation du fourreau (28), constitué par une goupille transversale (29) traversant l'extrémité supérieure de celui-ci et sur les parties débouchantes desquelles se positionnent des fourches (30a et 30b) réalisées aux extrémités des branches d'une pièce en U renversé (30), solidaire en rotation d'un organe de liaison (31) disposé entre la pièce en U (30) et l'extrémité de l'arbre de sortie (26a) du moto réducteur (26) par l'intermédiaire d'un empilage de rondelles élastiques constituant un limiteur de couple (32).

Selon une autre caractéristique de l'invention, la manoeuvre de la roue intermédiaire (6, 9) de chacun des longerons (3A, 4A) vers une position d'escamotage ou de surbaissement par rapport à une position d'alignement de référence avec les deux autres (5, 7 ou 8, 10), s'effectue par l'intermédiaire d'un moto réducteur (33) dont l'arbre de sortie est relié à une tige filetée (33a) montée en rotation dans une cage fixe (34) réalisée sur une partie inférieure du longeron (3A, 4A) et coopérant avec un trou également fileté (35) ménagé à une extrémité (36b) d'un bras de manoeuvre (36) qui s'articule par son autre extrémité sur un point fixe d'articulation (O) et porte sensiblement en son centre (O'), l'axe transversal de ladite roue intermédiaire (6, 9). Notons que l'escamotage et le surbaissement de la roue intermédiaire de chacun des longerons permet un meilleur franchissement des obstacles éventuels tels qu'escaliers ou pentes. Ajoutons que, de plus, le pivotement du chariot avec sa charge est rendu possible par surbaissement des roues intermédiaires (6, 9), tel que cela est illustré en traits mixtes sur la figure 9. Les moyens de liaison entre l'arbre moteur du moto réducteur (33) et la tige filetée (33a) étant avantageusement du même type que ceux décrits précédemment pour les tirants et représentés à la figure 10.

Préférentiellement, le point fixe d'articulation (O) du bras de manoeuvre (36) de la roue intermédiaire (6, 9) se confond avec un axe support, sur lequel est montée en rotation la seconde poulie d'entraînement (25) de ladite roue intermédiaire (6, 9) même ou seconde roue ainsi que la troisième roue (7 ou 10), par des renvois de chaînes (DE).

Bien entendu, les chaînes de transmission (A, B, C, D, E) peuvent être remplacées par des courroies.

Il est à noter enfin que cet ensemble automoteur permet à la demande :
- de commander simultanément les moteurs (21) des moyens de propulsion avant ou arrière des deux longerons (3A, 4A) ou train de roues,
- de commander ceux-ci indépendamment l'un de l'autre, soit dans le même sens, soit en opposition.
- de commander simultanément les moto réducteurs (26) des moyens de soulèvement de charge (66),
- de commander éventuellement le débrayage des moteurs des moyens de propulsion (65).

Par ailleurs la motorisation des moyens de soulèvement de charge (66) permettant le déplacement vertical des tirants (13) et des bras de manoeuvre (36) peut être remplacée par des moyens manuels tels qu'une manivelle dont l'extrémité remplacera l'extrémité de l'arbre de sortie des moto réducteurs qui seraient alors retirés sans pour autant sortir du champ de protection revendiqué de l'invention.

Notons aussi qu'il peut être prévu un boîtier de commande (40) comprenant un ensemble de boutons de commande (41, 42, 43, 44, 45, 46, 47, 48, 49, 50), ainsi que des voyants de visualisation (51, 52, 53, 54), ledit boîtier étant relié aux deux longerons. Les boutons (41, 42, 43, 44, 45, 46, 47, 48) sont, par exemple, destinés à commander les différents moteurs, le bouton (45) étant destiné à commander le levage et la descente des tirants avant et arrière, tandis que le bouton (50) commande les moteurs destinés à la propulsion et à la commande des bras de manoeuvre (36), ledit bouton (50) étant alors du type à deux positions, une position de commande de propulsion et une position de commande des bras, les deux positions étant identifiées par deux diodes électroluminescentes (53, 54). Notons qu'avantageusement les deux boutons (41, 42) de la deuxième rangée sont actifs pour tous les moteurs. Il va de soi que l'on pourrait aussi prévoir une télécommande par radio, sans pour autant sortir du cadre de l'invention.

Ajoutons qu'il peut être aussi prévu une béquille sur chacun des longerons pour assurer leur maintien en position verticale, permettant la mise en place aisée des traverses.

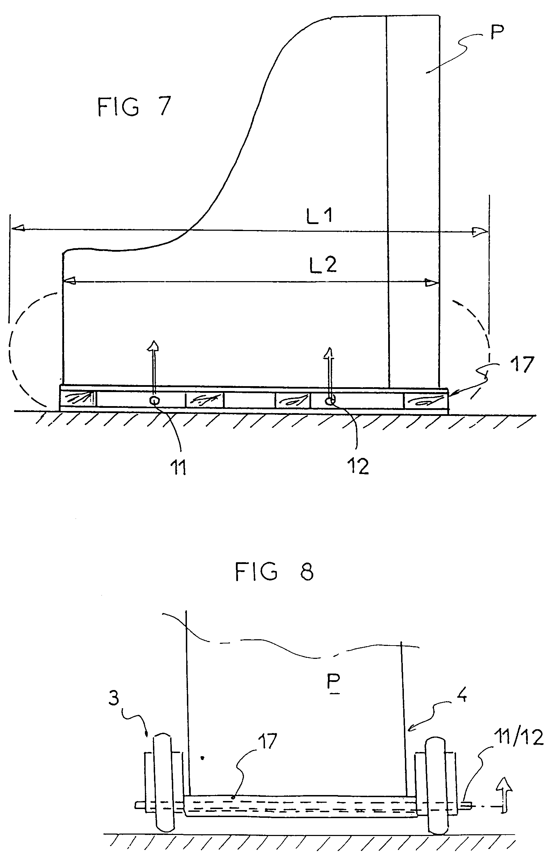

Notons aussi, que les roues d'extrémité dépassent au-delà de la charge à transporter, comme cela apparaît sur la figure 7, sur laquelle on peut voir que la longueur hors tout (L1) du chariot est supérieure à la longueur (L2) de la charge (P), ce qui permet de protéger ladite charge des chocs éventuels.

Par ailleurs, les roues intermédiaires (6, 9) sont avantageusement disposées en vis-à-vis selon un axe transversal à la verticale du centre de gravité de la charge à déplacer. Ainsi, dans le mode de réalisation donné à titre d'exemple, les roues intermédiaires (6, 9) ne sont pas disposées exactement au centre des longerons comme on peut le voir plus particulièrement à la figure 9, mais plus près de l'une des roues d'extrémité.

Il va de soi que l'on peut prévoir une béquille pivotante pour chaque longeron permettant à chacun de ceux ci de se maintenir vertical avant et pendant le montage des traverses.

Bien entendu, l'invention n'est pas limitée aux modes de réalisation décrits et représentés à titre d'exemples, mais elle comprend aussi tous les équivalents techniques ainsi que leurs combinaisons.

## Revendications

1. Chariot (1) de manutention destiné au transport d'une charge (P), notamment d'un piano, du type comportant des moyens de déplacement longitudinal (60) permettant le déplacement du chariot (1) selon une trajectoire sensiblement rectiligne parallèle à un axe longitudinal (AA') et des moyens de maintien de charge (63) permettant le maintien de ladite charge (P) sur le chariot (1), les moyens de déplacement longitudinal (60) comprenant deux longerons latéraux (3, 4) disposés longitudinalement parallèlement à l'axe longitudinal (AA'), lesdits longerons formant deux trains de roues (5, 6, 7 et 8, 9, 10) au moins au nombre de deux, à savoir, une roue avant et une roue arrière, et étant solidarisés entre eux lors du transport de la charge (P) par les moyens de maintien de charge (63), les moyens de maintien de charge (63) étant constitués par au moins deux traverses (11, 12) disposées transversalement entre les longerons (3, 4) grâce à des moyens de liaison (64), lesdites traverses étant indépendantes et démontables par rapport aux longerons, chacun des longerons étant constitué par deux flasques paralèlles et est caractérisé en ce que les moyens de liaison des longerons (3, 4 - 3A, 4A) avec les traverses (11, 12) sont constitués par au moins quatre tirants (13) coopérant avec chacune des extrémités desdites traverses (11, 12) prédisposées librement sous les longerons (3, 4 - 3A, 4A) de manière à les amener en contact des bords inférieurs (3c, 3d - 4c, 4d) des flasques (3a, 3b - 4c, 4b) de ces derniers, lors d'une action en traction sur les extrémités libres (13a) des tirants (13), en prenant appui sur les bords supérieurs (3e, 3f - 4e, 4f) des mêmes flasques après les avoir traversés.

2. Chariot de manutention selon l'une quelconque des la revendication 1 caractérisé en ce que chacun des longerons (3, 4 - 3A, 4A) est constitué par deux flasques parallèles (3a, 3b - 4a, 4b) disposés longitudinalement et déterminant entre eux un espace (e) dans lequel au moins deux roues (5 à 10) sont montées en rotation sur des axes transversaux de rotation correspondants (XX' - YY' - ZZ') traversant lesdits flasques (3a, 3b - 4a, 4b).

3. Chariot de manutention selon l'une quelconque des revendications précédentes caractérisé en ce que les tirants (13) sont constitués, d'une part, par une partie supérieure filetée réalisée à leurs extrémités libres (13a) destinée à coopérer avec les bords supérieurs (3e, 3f - 4e, 4f) des flasques (3a, 3b - 4a, 4b) des longerons (3, 4 - 3A, 4A) et, d'autre part, par une partie en forme d'anneau (13b) réalisée à leurs extrémités opposées et destinée à l'insertion libre des extrémités (11a, 11b - 12a, 12b) des traverses (11, 12).

4. Chariot de manutention selon l'une quelconque des revendications précédentes, caractérisé en ce qu'il comporte des moyens de soulèvement de charge (66) destinés à permettre la mise en place de la charge (P) sur ledit chariot (1).

5. Chariot de manutention selon les revendications 3 et 4 caractérisé en ce que les moyens de soulèvement de charge (66) sont constitués par un moto réducteur (26) exerçant l'action en traction sur chacun des tirants (13) d'un même longeron (3A ou 4A) par l'intermédiaire d'un arbre de sortie (26a) muni de moyens d'entraînement en rotation (27) d'un fourreau fileté (28) avec lequel coopère l'extrémité libre (13a) également filetée du tirant (13), de manière à ce que l'entraînement en rotation du fourreau (28) par le moto réducteur (26) sur la partie filetée (13a) du tirant (13), préalablement immobilisé en rotation par une traverse (11 ou 12) insérée dans son anneau d'extrémité (13b), provoque conséquemment un mouvement de montée ou de descente desdites traverses (11 ou 12).

6. Chariot de manutention selon l'une quelconque des revendications précédentes, caractérisé en ce qu'il comporte des moyens de pivotement et/ou des moyens de basculement (62) destinés à permettre au chariot (1) de pivoter afin de changer de direction et/ou de basculer autour d'un axe sensiblement transversal de manière à favoriser le franchissement d'obstacle lors du transport de la charge (P).

7. Chariot de manutention selon la revendication 6 caractérisé en ce que les moyens de pivotement (61) et les moyens de basculement (62) sont constitués par deux roues intermédiaires de pivotement (6, 9) montées en rotation en vis-à-vis sur chacun des longerons entre la roue avant et la roue arrière et par des moyens d'articulation aptes à permettre à la demande son alignement par rapport aux deux autres ou à la rendre escamotable entre les flasques (3a, 3b - 4a, 4b) desdits longerons (3, 4 - 3A, 4A) ou inversement à la surbaisser par rapport aux deux autres.

8. Chariot de manutention selon l'une quelconque des revendications précédentes, caractérisé en ce qu'il comporte des moyens de propulsion (65) constitués par au moins un moteur électrique (21) alimenté par une batterie (20), ledit moteur étant monté en liaison mécanique avec au moins deux roues d'entraînement situées en vis-à-vis sur chaque longeron (3, 4 - 3A, 4A).

## Claims

1. Handling trolley (1) intended for transporting a load (P), notably a piano, of the type having longitudinal movement means (60) enabling the trolley (1) to move along a substantially straight path parallel to a longitudinal axis (AA') and load holding means (63) for holding the said load (P) on the trolley (1), the longitudinal movement means (60) comprising two lateral longitudinal members (3, 4) disposed longitudinally parallel to the longitudinal axis (AA'), the said longitudinal members forming two sets of wheels (5, 6, 7 and 8, 9, 10) at least two in number, namely a front wheel and a rear wheel, and being connected together during transportation of the load (P) by the load holding means (63), the load holding means (63) consisting of at least two crossmembers (11, 12) disposed transversely between the longitudinal members (3, 4) by virtue of connecting means (64), the said crossmembers being independent and demountable with respect to the longitudinal members, each of the longitudinal members consisting of two parallel side frames, characterised in that the means of connecting the longitudinal members (3, 4 - 3A, 4A) with the crossmembers (11, 12) consist of at least four tie rods (13) cooperating with each of the ends of said crossmembers (11, 12) freely predisposed underneath the longitudinal members (3, 4 - 3A, 4A) so as to bring them in contact with the bottom edges (3c, 3d - 4c, 4d) of the side frames (3a, 3b - 4c, 4b) of the latter, during a tractive action on the free ends (13a) of the tie rods (13),bearing on the top edges (3e, 3f - 4e, 4f) of the same side frames after having passed through them.

2. Handling trolley according to Claim 1, characterised in that each of the longitudinal members (3, 4 - 3A, 4A) consists of two parallel side frames (3a, 3b - 4a, 4b) disposed longitudinally and determining between them a space (e) in which at least two wheels (5 to 10) are rotatably mounted on corresponding transverse rotation shafts (XX' - YY' - ZZ') passing through the said side frames (3a, 3b - 4a, 4b).

3. Handling trolley according to either one of the preceding claims, characterised in that the tie rods (13) consist on the one hand of a threaded top part produced at their free ends (13a) and intended to cooperate with the top edges (3e, 3f - 4e, 4f) of the side frames (3a, 3b - 4a, 4b) of the longitudinal members (3, 4 - 3A, 4A) and on the other hand a part in the shape of a ring (13b) produced at their opposite ends and intended for the free insertion of the ends (11a, 11b - 12a, 12b) of the crossmembers (11, 12).

4. Handling trolley according to any one of the preceding claims, characterised in that it has load lifting means (66) intended to enable the load (P) to be put in place on the said trolley (1).

5. Handling trolley according to Claims 3 and 4, characterised in that the load lifting means (66) consists of a geared motor (26) exerting the tractive action on each of the tie rods (13) of one and the same longitudinal member (3A or 4A) by means of an output shaft (26a) provided with means (27) of rotating a threaded sheath (28) with which the also threaded free end (13a) of the tie rod (13) cooperates, so that the rotation of the sheath (28) by the geared motor (26) on the threaded part (13a) of the tie rod (13), previously immobilised with respect to rotation by a cross member (11 or 12) inserted in its end ring (13), consequently causes an upward or downward movement of the said crossmembers (11 or 12).

6. Handling trolley according to any one of the preceding claims, characterised in that it has pivoting means and/or tilting means (62) intended to enable the trolley (1) to pivot in order to change direction and/or to tilt about a substantially transverse axis so as to assist clearing an obstacle during the transportation of the load (P).

7. Handling trolley according to Claim 6, characterised in that the pivoting means (61) and the tilting means (62) consist of two intermediate pivoting wheels (6, 9) mounted for rotation opposite each other on each of the longitudinal members between the front wheel and the rear wheel, and articulation means able to permit, on demand, its alignment with respect to the other two, or to make it retractable between the side frames (3a, 3b - 4a, 4b) of the said longitudinal members (3, 4 - 3A, 4A), or conversely to lower it with respect to the other two.

8. Handling trolley according to any one of the preceding claims, characterised in that it has propulsion means (65) consisting of at least one electric motor (21) powered by a battery (20), the said motor being mounted in mechanical connection with at least two drive wheels situated opposite each other on each longitudinal member (3, 4 - 3A, 4A).

## Patentansprüche

1. Lastförderwagen (1), der zum Transport einer Last (P), insbesondere eines Pianos bestimmt ist, vom Typ, der eine Einrichtung zur Längsbewegung (60), die die Fortbewegung des Wagens (1) längs einer genau geradlinigen Bahn parallel zu einer Längsachse (AA') gestattet, und eine Lasthalteeinrichtung (63) umfaßt, die das Halten der Last (P) auf dem Wagen (1) gestattet, wobei die Längsbewegungseinrichtung (60) zwei seitliche Längsträger (3, 4) aufweist, die parallel zu der Längsachse (AA') angeordnet sind, wobei die Längsträger zwei Reihen von Rädern (5, 6, 7 und 8, 9, 10) bilden mit mindestens zwei Rädern, und zwar ein vorderes Rad und ein hinteres Rad und während des Transportes der Last (P) durch die Lasthalteeinrichtung (63) fest miteinander verbunden sind, wobei die Lasthalteeinrichtung (63) durch zumindest zwei Querträger (11, 12) gebildet ist, die durch Verbindungsmittel (64) zwischen den Längsträgern (3, 4) querliegend angeordnet sind, wobei die Querträger und in Bezug auf die Längsträger von einander unabhängig und demontierbar sind, wobei jeder der Längsträger durch zwei parallele Flansche gebildet und dadurch gekennzeichnet ist, daß die Verbindungsmittel der Längsträger (3, 4 - 3A, 4A) mit den Querträgern (11, 12) durch mindestens vier Stehbolzen (13) gebildet sind, die mit jedem der Enden dieser Querträger (11, 12) zusammenwirken, die unterhalb der Längsträger (3, 4 - 3A, 4A) derart frei vorpositioniert sind, um sie mit den unteren Kanten (3c, 3d - 4c, 4d) der Flansche (3a, 3b - 4c, 4b) in Kontakt zu bringen beim Aufbringen von Zug auf die freien Enden (13a) der Stehbolzen (13), die von einer Stütze auf den oberen Kanten (3e, 3f - 4e, 4f) der gleichen Flansche gehalten werden, nachdem die Traversen durchgesetzt wurden.

2. Lastförderwagen nach Anspruch 1, dadurch gekennzeichnet, daß jeder der Längsträger (3, 4 - 3A, 4A) durch zwei parallele Flansche (3a, 3b - 4a, 4b) gebildet ist, die der Länge nach angeordnet sind und zwischen sich einen Zwischenraum (e) bilden, in welchem mindestens zwei Räder (5 bis 10) drehbar auf den entsprechenden, querverlaufenden Drehachsen (XX'- YY'- ZZ') angebracht sind, die durch diese Flansche (3a, 3b - 4a, 4b) verlaufen.

3. Lastförderwagen nach einem der vorhergehenden Ansprüche, dadurch gekennzeichnet, daß die Stehbolzen (13) einerseits durch einen mit Gewinde versehenen, oberen Teil, der an ihren freien Enden (13a) ausgeführt und dazu bestimmt ist, mit den oberen Kanten (3e, 3f - 4e, 4f) der Flansche (3a, 3b - 4a, 4b) der Längsträger (3, 4 - 3A, 4A) zusammenzuwirken, und andererseits durch einen Teil in Form eines Ringes (13b) gebildet sind, der an ihren gegenüberliegenden Enden ausgeführt und zum freien Einsetzen der Enden (11a, 11b - 12a, 12b) der Querträger (11, 12) bestimmt ist.

4. Lastförderwagen nach einem der vorhergehenden Ansprüche, dadurch gekennzeichnet, daß dieser Lasthebeeinrichtungen (66) enthält, die dazu bestimmt sind, das Positionieren der Last (P) auf diesem Wagen (1) zu gestatten.

5. Lastförderwagen nach den Ansprüchen 3 und 4, dadurch gekennzeichnet, daß die Lasthebeeinrichtungen (66) durch einen Getriebemotor (26) gebildet sind, der die Zugwirkung auf jeden der Stehbolzen (13) des gleichen Längsträgers (3A oder 4A) mittels einer Abtriebswelle (26a) ausübt, die mit einer Drehantriebseinrichtung (27) einer mit Gewinde versehenen Hülse (28) ausgestattet ist, mit welcher das gleichfalls mit Gewinde versehene, freie Ende (13a) des Stehbolzens (13) zusammenwirkt, derart, daß der Drehantrieb der Hülse (28) durch den Getriebemotor (26) an dem mit Gewinde versehenen Teil (13a) des Stehbolzens (13), dessen Drehung vorher durch einen in seinen Endring (13b) eingesetzten Querträger (11 oder 12) angehalten wurde, folglich eine Aufwärts- oder Abwärtsbewegung dieser Querträger (11 oder 12) einleitet.

6. Lastförderwagen nach einem der vorhergehenden Ansprüche, dadurch gekennzeichnet, daß dieser Schwenkeinrichtungen und/oder Kippeinrichtungen (62) umfaßt, die dazu bestimmt sind, den Wagen (1) nach einer Richtungsänderung um eine etwa querverlaufende Achse schwenken und/oder kippen zu können, derart, daß das Überqueren eines Hindernisses während des Transportes der Last (P) begünstigt wird.

7. Lastwagen nach Anspruch 6, dadurch gekennzeichnet, daß die Schwenkeinrichtung (61) und die Kippeinrichtung (62) durch zwei, auf jedem der Längsträger zwischen dem vorderen Rad und dem hinteren Rad gegenüberliegend drehbar montierte Zwischenräder zum Schwenken (6, 9) und durch eine Schwenkeinrichtung gebildet sind, die geeignet sind, bei Bedarf deren Ausrichtung bezüglich der zwei anderen Räder zu gestatten oder sie zwischen den Flanschen (3a, 3b - 4a, 4b) dieser Längsträger (3, 4 - 3A, 4A) oder umgekehrt einziehbar zu machen, um es in Bezug auf die beiden anderen herunterzudrücken.

8. Lastförderwagen nach einem der vorhergehenden Ansprüche, dadurch gekennzeichnet, daß dieser eine Antriebseinrichtung (65) umfaßt, die durch mindestens einen von einer Batterie (20) gespeisten Elektromotor (21) gebildet ist, wobei dieser Motor in mechanischer Verbindung mit zumindest zwei Antriebsrädern montiert ist, die sich auf jedem Längsträger (3, 4 - 3A, 4A) gegenüberliegen.
